# EUROPEAN PATENT SPECIFICATION

(11) **EP 4 284 848 B1**
(45) Date of publication and mention of the grant of the patent: **13.11.2024**
(21) Application number: 22702442.9
(22) Date of filing: 25.01.2022
(51) Int. Cl.: C08F 279/02, C08L 51/04

(54) **HIGH IMPACT MONOVINYLIDENE AROMATIC POLYMERS**
HOCHSCHLAGFESTE MONOVINYLIDENAROMATISCHE POLYMERE
POLYMÈRES AROMATIQUES DE MONOVINYLIDÈNE À GRANDE RÉSISTANCE AUX CHOCS

(30) Priority: 29.01.2021 EP 21154233
(43) Date of publication of application: 06.12.2023
(73) Proprietor: TotalEnergies OneTech Belgium, 7181 Seneffe (Feluy) (BE)
(72) Inventor: NPETGAT, Eloïne, 7181 Seneffe (Feluy) (BE)
(74) Representative: AWA Benelux
(86) International application number: PCT/EP2022/051658
(87) International publication number: WO 2022/161961

(56) References cited:
- JP-A- H04 100 810
- JP-A- S61 215 640
- KR-A- 20030 042 627

## Description

### Field of the Invention

The present invention relates to rubber-modified monovinylidene aromatic polymer compositions, such as high impact polystyrene (HIPS) compositions, with improved performances in impact strength and a reduced level of volatile organic compounds (VOC), without affecting other mechanical, thermal and rheological properties. The present invention also relates to a process for the preparation of such compositions.

### State of the Art

High impact monovinylidene aromatic polymers have been known for a long time and have numerous applications in many fields such as food packaging, including disposable trays, coffee cups, and yogurt cups, toys, bicycle components, television and computer houses, automotive instrument panels and gas tanks.

The utility of a particular high impact monovinylidene aromatic polymer depends on the polymer having some combination of mechanical, thermal and/or physical properties that render the material suitable for a particular application, yet for a majority of applications, mechanical properties are the key feature.

Various techniques for improving the mechanical properties, such as impact strength, of compositions based on monovinylidene aromatic polymers and rubber have been disclosed. Among them, incorporation of a blend of polybutadiene rubbers in the monovinylidene aromatic polymer matrix has been proposed.

US 5,708,081 discloses a polymer composition comprising a vinylaromatic polymer and a rubber containing polybutadiene, wherein the rubber is derived from a high-viscosity polybutadiene and from a low-viscosity polybutadiene,
- the said high-viscosity polybutadiene exhibiting a linear structure, a cis- 1,4 structure content higher than 80% and a viscosity, measured at 25 °C at a concentration of 5% by weight in styrene, ranging from 120 to 350 centipoises, and
- the said low-viscosity polybutadiene exhibiting a cis-1,4 structure content lower than 80% and a viscosity, measured at 25 °C at a concentration of 5% by weight in styrene, ranging from 30 to 90 centipoises.
The polymer composition contains between 2 and 25% by weight of poybutadiene.

US 6,350,813 discloses a rubber-modified monovinylidene aromatic polymer composition comprising:
I) a matrix comprising a monovinylidene aromatic polymer, and
II) a rubber, in the form of dispersed rubber particles within the matrix, wherein the rubber particles are prepared from a blend of:
   - from 75 to 25 weight percent based on the total weight of rubber, of a star branched diene rubber, having a cis 1,4 structure content of less than 75 percent; and
   - from 25 to 75 weight percent, based on the total weight of rubber, of a linear diene rubber, having a cis 1,4 structure content of less than 50 percent;
   wherein the viscosity of the star branched diene rubber is lower than the viscosity of the linear diene rubber.

JPH04100810A discloses an impact-resistant polystyrene based resin, with improved impact strength, rigidity and surface gloss, comprising between 2 and 25% by weight of a particular polybutadiene blend and between 98 and 75% by weight of a polystyrene based resin.

The polybutadiene blend comprises:
- between 80 and 30% by weight of a high cis high molecular weight polybutadiene rubber with a cis-1,4 structure content of 80% by weight or more, preferably between 80 and 98% by weight of a cis-1,4 structure, between 0.5 and 20% by weight of a trans-1,4 structure and between 0.5 and 20% by weight of a vinyl-1,2 structure, the high molecular weight polybutadiene rubber being characterized by an intrinsic viscosity comprised between 3.0 and 7.0, and
- between 20 and 70% by weight of a low cis low molecular weight polybutadiene rubber with a cis-1,4 structure content of less than 80%, preferably between 25 and 80% of a cis-1,4 structure, between 40 and 70% by weight of a trans-1,4 structure and between 7 and 50% by weight of a vinyl-1,2 structure, the low molecular weight polybutadiene rubber being characterized by an intrinsic viscosity comprised between 0.5 and 1.4.

US 4,493,922 discloses an impact-resistant thermoplastic moulding material which essentially contains
A) polystyrene as the matrix and
B) uniformly dispersed therein, two elastomeric polymers or copolymers (b1) and (b2), predominantly composed of 1,3-dienes, in an amount of from 3 to 30% by weight, calculated as polybutadiene and based on the matrix, the polymers or copolymers being present as particles of different mean size (different d50 of the cumulative mass distribution), namely
   (b1) as particles of 0.2-0.6 µm, in a proportion of 60-95% by weight, based on polybutadiene, and
   (b2) as particles of 2-8 µm, in a proportion of 40-5% by weight, based on polybutadiene, with or without
C) conventional additives, in effective amounts, in which final moulding material the polymer or copolymer (b1) has a capsule particle morphology and the polymer or copolymer (b2) has a cell particle morphology, a coil particle morphology or a cell and coil particle morphology.

KR 20050030004 discloses a method for preparing continuously an ultra-high impact rubber-modified polystyrene resin which contains a dispersive rubber particle whose particle size distribution has a bimodal shape, and has a high grafting efficiency, a narrow distribution of molecular weight and excellent Izod impact strength and practical impact strength. Preferably the three different kinds of synthetic butadiene polymers comprise 15-50% by weight of a styrene-butadiene block copolymer and 50-85 % by weight of a low cis-polybutadiene rubber.

KR 20050030263 discloses a method for preparing continuously a rubber-modified polystyrene resin which contains a dispersive rubber particle whose particle size distribution has a trimodal shape, and has a high grafting efficiency, a narrow distribution of molecular weight and excellent Izod impact strength and practical impact strength. The method comprises the steps of reacting a liquid supply material composition comprising three different kinds of synthetic butadiene polymers dissolved in a styrene-based monomer. Preferably the three different kinds of synthetic butadiene polymers comprise 15-35% by weight of a styrene-butadiene block copolymer, 50-85% by weight of a low cis-polybutadiene rubber, and 15-35% by weight of a high cis-polybutadiene rubber.

CN101613440 discloses a high impact high gloss bimodal polystyrene material and preparation method thereof, comprising the mixing of polybutadiene rubber component with polystyrene monomers; wherein, the polybutadiene rubber component is selected from high cis-polybutadiene and/or low cis-polybutadiene, the cis-content of high cis-polybutadiene is not less than 94% by mole and the cis-content of low cis-polybutadiene is between 33% to 40% by mole. The invention also provides a preparation method of the high impact high gloss bimodal polystyrene.

GB1174214 discloses a high impact polystyrene composition comprises (a) as the continuous phase, 70-99 parts by weight of polystyrene and (b) as a discontinuous elastomer gel phase dispersed there through, 30-1 parts by weight of a diene elastomer-styrene inter-polymer phase wherein (1) 70-97% by weight of the dispersed phase have particle sizes of 1-3 µm diameter and (2) 30-3% by weight of the dispersed phase have particle sizes of 5-25 µm diameter. The composition may be prepared by blending together two high impact polystyrene compositions, one of which contains the dispersed elastomer phase having the smaller particles and the other of which contains the dispersed elastomer of larger particle size. In another embodiment, styrene is inter-polymerized with two different elastomers to yield the two different particle size ranges in the dispersed phase.

Without contesting the associated advantages of the state of the art systems, it is nevertheless obvious that there is still a need for high impact monovinylidene aromatic polymers, in particular high impact styrene polymers, exhibitting improved mechanical properties.

### Aims of the Invention

The present invention aims to provide rubber-modified monovinylidene aromatic polymer compositions, such as high impact polystyrene (HIPS) compositions showing a unique combination of mechanical properties and thermal resistance.

The present invention aims to provide high impact polystyrene with improved Notched Izod impact strength at room temperature, which substantially remains unmodified after extruding at high temperature (≥240 °C).

### Summary of the invention

The present invention discloses a rubber-modified monovinylidene aromatic polymer composition comprising:
I) a matrix comprising monovinylidene aromatic polymer, and
II) from 5 to 25% by weight of rubber in the form of discrete rubber particles dispersed within the matrix, wherein the rubber particles comprise a blend of at least two polybutadienes as well as graft- and block copolymers of polybutadiene and monovinylidene aromatic polymer segments,

said rubber particles exhibit:
   - an average particle size by volume (D50) comprised between 1.5 and 5.5 µm, as measured by laser light scattering;
wherein said blend of at least two polybutadienes comprises:
   - at least 50 % by weight of one or more polybutadiene(s) with a cis-1,4 structure content of at least 80% by weight and
   - at most 50% by weight of one or more polybutadiene(s) with a trans-1-4 structure content of at least 25% by weight and a 1 ,2-vinyl content of at least 5% by weight;
said blend of at least two polybutadienes, as such and prior to being part of the rubber-modified monovinylidene aromatic (co)polymer, being characterized by a dynamic solution viscosity, at 20°C, comprised between 50 and 160 mPa.s, as determined by Brookfield viscometer according to ISO 2555, at a concentration of 5.43% by weight in toluene.

Preferred embodiments of the present invention disclose on or more of the following features:
- the rubber particles are characterized by a D90 of 12 µm or less and a span (D90 - D10)/D50 equal to or less than 2;
- the blend of at least two polybutadienes comprises:
   - at least 60 % by weight of one or more polybutadiene(s) with a cis-1,4 structure content of at least 80% by weight and
   - at most 40% by weight of one or more polybutadiene(s) with a trans-1-4 structure content of at least 25% by weight and a 1 ,2-vinyl content of at least 5% by weight;
- the blend of the least two polybutadienes comprises:
   - at least 60 % by weight of one or more polybutadiene(s) with a cis-1,4 structure content of at least 90% by weight and
   - at most 40% by weight of one or more polybutadiene(s) with a trans-1-4 structure content of at least 35% by weight and a 1,2-vinyl content of at least 10% by weight;
- the monovinylidene aromatic polymer, is formed by the polymerization of one or more monovinylidene aromatic compounds selected from the group consisting of styrene, alpha-methyl styrene and ring-substituted styrenes;
- the monovinylidene aromatic polymer is characterized by a weight average molecular weight comprised between 130,000 and 300,000 g/mol;
- the monovinylidene aromatic polymer is polystyrene;
- the rubber-modified monovinylidene aromatic polymer composition comprises from 8 to 12% by weight of rubber in the form of discrete, dispersed rubber particles dispersed within the polymer matrix.

The present invention further discloses a method for the preparation of the rubber-modified monovinylidene aromatic polymer composition comprising the steps of:
a. providing a solution of a blend of at least two polybutadienes in monovinylidiene aromatic monomer;
b. polymerizing the solution of monovinylidiene aromatic monomer and polybutadiene in a continuous multi reactor process comprising at least two series-connected stirred vessels with continuous flow, starting at a temperature comprised between 90 and 130 °C and stepwise increasing to a temperature comprised between 150 and 190 °C to a monomer conversion of from 70 to 90%;
c. devolatilizing the composition of step b) at a temperature comprised between 210 and 255 °C and a pressure comprised between 1 and 100 mbar.abs.

Preferred embodiments of the method for the preparation of the rubber-modified monovinylidene aromatic polymer composition disclose one or more of the following features:
- from 5 to 15% by weight, preferably from 8 to 12% by weight of a blend of at least two polybutadienes is provided in step a);
- the blend of at least two polybutadienes, provided in step a), comprises at least 50% by weight of one or more polybutadiene(s) with a cis-1,4 content of at least 80% by weight and at most 50% by weight of one or more polybutadiene(s) with a trans-1,4 structure content of at least 25% by weight and a 1,2-vinyl content of at least 5% by weight;

- the blend of at least two polybutadienes, provided in step a), is characterized by a dynamic solution viscosity, at 20°C, comprised between 50 and 160 mPa.s, as determined by Brookfield viscometer according to ISO 2555, at a concentration of 5.43% by weight in toluene;
- one or more polymerization initiator(s) is (are) optionally provided in step b), said one or more polymerization initiator(s) being free radical initiator(s);
- one or more retarding agent(s), selected from the group consisting of free radical scavenger, a polyfunctional (meth)acrylic monomer, an allylic compound, a metal salt of an unsaturated monocarboxylic acid, a tertiary amine oxide, an aromatic tertiary amine oxide, a tertiary amine and mixtures thereof, is (are) optionally added before initiation of step c).

The present invention additionally discloses a rubber-modified monovinylidene aromatic polymer composition characterized by:
- an Izod impact strength, according to ISO 527-1, of at least 12 kJ/m², measured at 23 °C;
- an Izod impact strength, according to ISO 527-1, of at least 9 kJ/m², measured at -20 °C;
- a young modulus, according to ISO 527-1, of at least 1700 Mpa;
- a tensile strength, according to ISO 527-1, of at least 25 MPa; and
- an elongation at break, according to ISO 527-1, of at least 50 %;
said characteristics applying to the monovinylidene aromatic polymer composition as obtained after the devolatilization step and on the devolatized monovinylidene aromatic polymer composition after three extrusions at a temperature of at least 250°C up to 280°C, in a twin-screw extruder with a LID value of 52.

### Detailed Description of the Invention

### Definitions

For the purpose of the invention the following definitions are given.

As used herein, a "polymer" is a polymeric compound prepared by polymerizing monomers, whether of the same or a different type. The generic term polymer thus embraces the term homopolymer, usually employed to refer to polymers prepared from only one type of monomer, and the terms copolymer and interpolymer as defined below.

As used herein, a "copolymer", "interpolymer" and like terms mean a polymer prepared by the polymerization of at least two different types of monomers. These generic terms include polymers prepared from two or more different types of monomers, i.e. terpolymers, tetrapolymers, etc.

As used herein, "blend", "polymer blend" and like terms refer to a composition of two or more compounds, typically two or more polymers. As used herein, "blend" and "polymer blend" also include "reactor blends," such as where a monomer is polymerized in the presence of a polymer. For example, the blend may initially be a blend of a first polymer and one or more monomers which are then polymerized to form a second polymer. A blend may or may not be miscible. A blend may or may not be phase separated. A blend may or may not contain one or more domain configurations, as determined from transmission electron spectroscopy, light scattering, x-ray scattering, or any other method known in the art. Preferred blends (i.e. preferred reactor blends) include two or more phases. For example, the blend may include a first phase including some or all of the monovinylidene aromatic polymer and a second phase including some or all of the rubber.

As used herein, "composition" and like terms mean a mixture or blend of two or more components. The composition of this invention is the rubber-modified monovinylidene aromatic polymer. The composition may include other components, polymeric or non-polymeric (i.e., additives), necessary or desirable to the end use of the composition.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the recited end point values themselves (e.g. from 1.0 to 5.0 includes both 1.0 and 5.0). Any numerical range recited herein is intended to include all sub-ranges subsumed therein.

### The composition

The present invention relates to high impact monovinylidene aromatic polymers comprising a monovinylidene aromatic polymer matrix comprising rubber particles, said rubber particles comprising a blend of at least two polybutadienes as well as graft- and block copolymers of polybutadiene and monovinylidene aromatic polymer segments, said rubber particles exhibiting a particle size distribution by volume within the range of from 0.1 and 15 µm.

Monovinylidene aromatic polymers suitable for use as the matrix in the composition of the present invention are those produced by polymerizing a monovinylidene aromatic monomer. Monovinylidene aromatic monomers include, monomers of the formula:

Ar - CR=CH₂

wherein R is hydrogen or methyl, Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl group.

Preferably, Ar is phenyl or alkylphenyl, wherein alkylphenyl refers to an alkyl substituted phenyl group, with phenyl being most preferred.

Typical vinyl aromatic monomers which can be used include styrene, alpha-methylstyrene, all isomers of vinyl toluene, especially paravinyltoluene, all isomers of ethyl styrene, propyl styrene, methyl-4-styrene, methyl-3-styrene, methoxy-4-styrene, hydroxymethyl-2-styrene, ethyl-4-styrene, ethoxy-4-styrene, dimethyl-3,4-styrene, chloro-2-styrene, chloro-3-styrene, chloro-4- methyl-3-styrene, tert-butyl-3-styrene, dichloro-2,4-styrene, dichloro-2,6-styrene, vinyl biphenyl, vinyl naphthalene, vinyl anthracene and the like, and mixtures thereof. It would not depart from the scope of the invention to use more than one monovinylidene aromatic monomer. Preferably, the monovinylidene aromatic monomer includes or consists of styrene.

The monovinylidene aromatic polymer is the monovinylidene aromatic polymer matrix in the rubber-modified monovinylidene aromatic polymer. The concentration of the monovinylidene aromatic monomers (i.e. the concentration of styrene) preferably is 60 % by weight or more, more preferably 65 % by weight or more, even more preferably 70 % by weight or more, even more preferably 80 % by weight or more, even more preferably 88 % by weight or more, based on the total weight of the rubber-modified monovinylidene aromatic polymer.

The monovinylidene aromatic monomers may also be combined with other copolymerizable monomers. Examples of such monomers include, but are not limited to, acrylic monomers such as acrylonitrile, methacrylonitrile, (meth)acrylic acid, C1-C18 alkyl(meth)acrylate; fumaronitrile; methyl methacrylate or n-butyl acrylate; maleimide, phenylmaleimide, maleic anhydride and/or n-aryl maleimides such as n-phenyl maleimide, and conjugated and nonconjugated dienes and alkyl esters of acrylic or methacrylic acid. Representative copolymers include styreneacrylonitrile (SAN) copolymers.

The polymerization of the monovinylidene aromatic monomer is conducted in the presence of pre-dissolved elastomer to prepare impact modified, or grafted rubber containing products.

In a preferred embodiment, the rubber-modified monovinylidene aromatic polymer is a rubber-modified polystyrene (HIPS) or a rubber-modified poly(styrene-acrylonitrile) (ABS). More preferably, the rubber-modified monovinylidene aromatic polymer is a rubber-modified polystyrene (HIPS).

The molecular weight of the monovinylidene aromatic polymer may be characterized by the weight average molecular weight (Mw), and a dispersity (D_{M} = Mw/Mn).

The molecular weight of the monovinylidene aromatic polymer influences its mechanical strength and its rheological properties. In the invention, the molecular weight should be sufficiently high so that the composition has good impact strength, despite having a low concentration of the rubber (i.e. at most 25 % by weight based on the total weight of the rubber-modified monovinylidene aromatic polymer) and/or a generally high concentration of monovinylidene aromatic polymer (i.e. at least 75 % by weight based on the total weight of the rubber-modified monovinylidene aromatic).

The monovinylidene aromatic polymer of the present invention is characterized by a weight average molecular weight (Mw) comprised between 130,000 and 300,00 g/mol, preferably between 150,000 and 250,000 g/mol, more preferably between 170,000 and 230,000 g/mol and a dispersity (D_{M} = Mw/Mn) comprised between 2.0 and 3.0, preferably between 2.2 and 2.8.

The rubber present in the composition of the present invention is in the form of discrete, dispersed rubber particles comprising a blend of:
a) one or more polybutadienes (A) having
   - a cis 1,4 structure content of at least 80 weight percent, preferably of at least 85% by weight, more preferably of at least 90% by weight, most preferably of at least 95% by weight; and
   - a 1,2-vinyl contents of at most 5% by weight, preferably of at most 4% by weight, more preferably of at most 3% by weight, most preferably of at most 2.5% by weight;
b) one or more polybutadienes (B), having
   - a trans 1,4 structure content of at least 25% by weight, preferably of at least 35% by weight, more preferably of at least 45% by weight, most preferably of at least 50% by weight; and
   - a 1,2-vinyl contents of at least 5% by weight, preferably of at least 7 % by weight, more preferably of at least 9% by weight, most preferably of at least 10% by weight.

The rubber particle comprising a blend present in the composition of the present invention comprises
at least 50% by weight of one or more polybutadienes (A), preferably at least 60% by weight, more preferably at least 70% by weight, most preferably at least 80% by weight of one or more polybutadienes (A), and
at most 50% by weight, preferably at most 40% by weight, more preferably at most 30% by weight, most preferably at most 20% by weight of one or more polybutadienes (B).

The polybutadiene blend comprising one or more polybutadiene(s) (A) and one or more polybutadiene(s) (B), used as starting material for the preparation of the rubber-modified monovinylidene aromatic (co)polymer and prior to being incorporated in the rubber-modified monovinylidene aromatic (co)polymer, is characterized by a dynamic solution viscosity, as determined by Brookfield viscometer according to ISO 2555 at a concentration of 5.43% by weight in toluene and at 20°C , of from 50 to 160 mPa.s, preferably of from 60 to 150 mPa.s, more preferably of from 70 to 140 mPa.s.

The polybutadiene blend comprising one or more polybutadiene(s) (A) and one or more polybutadiene(s) (B) is present in the monovinylidene aromatic polymer matrix at a concentration of from 5 to 25% by weight, preferably of from 5 to 20% by weight, more preferably of from 5 to 15% by weight, most preferably of from 8 to 12% by weight based on the total weight of the composition comprising the monovinylidene aromatic polymer matrix and the polybutadiene blend.

The polybutadiene blend, present in the monovinylidene aromatic polymer matrix is present in the form of discrete, dispersed rubber particles characterized by a particle size distribution by volume within the range of from 0.1 and 15 µm, preferably of from 0.3 and 12 µm, more preferably of from 0.4 and 10 µm, most preferably of from 0.5 to 8 µm.

The dispersed rubber particles are characterized by:
- a volume median particle diameter (D50(v)) comprised between 0.8 and 5,5 µm, preferably between 1 and 5 µm, more preferably between 1.5 and 4.5 µm;
- a D90 of 12 µm or less, preferably a D90 of 10 µm or less, more preferably a D90 of 8 µm or less; and
- a span (D90 - D10)/D50 equal to or less than 2, preferably equal to or less than 1.8, more preferably equal to or less than 1.6, most preferably equal to or less than 1.5;
wherein:
D90 represents the particle diameter where 90% by volume of the rubber particles lies below and
D10 represents the particle diameter where 10% by volume of the rubber particles lies below.

Preferably the particle size distribution is monomodal.

Particle size distribution is determined by the laser light scattering granulometry technique using the particle size analyzer (HORIBA 920) from (Horiba Scientific). This technique is used to characterize rubber particle size distribution in high impact polystyrene (HIPS) since more than 30 years (R. A. Hall, R. D. Hites, and P. Plantz, "Characterization of rubber particle size distribution of high-impact polystyrene using low-angle laser light scattering", J. Appl. Polym. Sci. 27, 2885, (1982*)*).

The technique of laser diffraction is based on the principle that particles passing through a laser beam will scatter light at an angle that is directly related to their size: large particles scatter at low angles, whereas small particles scatter at high angles. The laser diffraction is accurately described by the Fraunhofer approximation and the Mie theory, with the assumption of spherical particle morphology.

Concentrated suspensions, comprising about 1.0% by weight of rubber-modified monovinylidene aromatic polymer are prepared, using suitable wetting and/or dispersing agents.

Suitable solvents are for example water or organic solvents such as for example ethanol, isopropanol, octane or methyl ethyl ketone. A sample presentation system ensures that the material under test passes through the laser beam as a homogeneous stream of particles in a known, reproducible state of dispersion.

Particle size measurements are performed on pure solvent, e.g. 150 ml of methyl ethyl ketone, to which the concentrated suspension of polybutadiene particles is added drop by drop until the concentration of rubber particles is such that a transmission, as displayed by the particle size analyzer (HORIBA 920), comprised between 75 and 90 % is obtained.

The compositions of the invention can further comprise one or more fillers and/or additives as long as they do not detrimentally affect the desired property combinations that are otherwise obtained, or, preferably, they would improve one or more of the properties.

For example, in an embodiment, the compositions of the present invention further may comprise one or more flame retarding agents such as decabromodiphenyl oxide, decabromodiphenyl ethane, 1,2-bis(tri-bromophenoxy) ethane, ethylene-1,2-bis(pentabromophenyl), tris(tribromophenoxy)triazine, deca bromodiphenyl amine, decabromodiphenyl oxide, pentabromobenzyl acrylate, tetra bromobisphenol A, N,N'-bis(tetrabromophthalimide), N,N'-ethylenebis(tetra bromo phthalimide), pentabromo benzyl acrylate, brominated polystyrene, and brominated epoxy oligomers and polymers; one or more inorganic flame retardant synergists such as iron oxide, tin oxide, zinc oxide, aluminum trioxide, alumina, antimony tri- and pentoxide, and boron compounds, antimony silicates and ferrocene; one or more anti-dripping agent such as polytetrafluoroethylene; and conventional ingredients, such as fillers, pigments, colorants, UV stabilizers, heat stabilizers, lubricants, antioxidants (*i.e*., hindered phenols such as, for example, IRGANOX^{™}1076 ) plasticizers, mould release agents, processing aids other than mineral oil (such as other oils, organic acids such as stearic acid, metal salts of organic acids).

The concentration of each of the conventional additives is typically in the range up to 25% by weight, and more preferably up to 15% by weight, of the total weight of the rubber modified monovinylidene aromatic polymer formulation.

The compositions of this invention can comprise polymers other than the monovinylaromatic polymers and the rubber. Representative other polymers include, but are not limited to ethylene polymer (*i*.*e*. low density polyethylene (LDPE), ultra-low density polyethylene (ULDPE), medium density polyethylene (MDPE), linear low density polyethylene (LLDPE), high density polyethylene (HDPE), homogeneously branched linear ethylene polymer, substantially linear ethylene polymer, graft-modified ethylene polymers, ethylene vinyl acetate interpolymer, ethylene acrylic acid interpolymer, ethylene ethyl acetate interpolymer, ethylene methacrylic acid interpolymer, ethylene methacrylic acid ionomer, and the like), conventional polypropylene (*i.e*. homopolymer polypropylene, polypropylene copolymer, random block polypropylene interpolymer and the like), polyether block copolymer (i.e. PEBAX), polyphenylene ether, (co)polyester polymer, polyester/polyether block polymer (i.e. HYTEL), ethylene carbon monoxide interpolymer *(i.e*., ethylene/carbon monoxide (ECO), copolymer, ethylene/acrylic acid/carbon monoxide (EAACO) terpolymer, ethylene/methacrylic acid/carbon monoxide (EMAACO) terpolymer, ethylene/vinyl acetate/carbon monoxide (EVACO) terpolymer and styrene/carbon monoxide (SCO), polyethylene terephthalate (PET), chlorinated polyethylene, styrene-butadiene-styrene (SBS) interpolymer, styrene-ethylene-butadiene-styrene (SEBS) interpolymer, and the like and mixtures of two or more of these other polymers. The polyolefins that can comprise one or more of the other polymers include both high and low molecular weight polyolefins, and saturated and unsaturated polyolefins.

If the composition comprises one or more other polymers, then the other polymers typically are present in an amount of no more than 20% by weight of the total weight of the composition, preferably no more than 15% by weight, ore preferably no more than 10 by weight, more preferably no more than 5 % by weight, and most preferably no more than 2% by weight of the total weight of the composition.

### Process to prepare the composition

Another subject of the invention relates to a process for the manufacture of the polymer compositions described above.

The polymerization stage may be a suspension or bulk polymerization process, the principle of these two techniques being well known to a person skilled in the art.

Preferably the polymerization stage is a bulk polymerization process.

In the bulk polymerization process, the polybutadienes are first ground and dissolved in the at least one monovinylidene aromatic monomer, optionally in the presence of an organic solvent. The polymerization will be generally conducted between 80 °C and 210 °C and preferably between 100 °C and 190 °C, optionally in the presence of one or more polymerization initiator(s) and optionally one or more transfer agent(s). During this polymerization stage the vinylaromatic monomer is polymerized either by itself or with a proportion of the polybutadienes and in this latter case grafting is said to take place between the polybutadienes and the vinylidene aromatic monomer and, in addition, the polybutadienes are partially crosslinked.

Suitable polymerization initiators are chemical initiators including peroxide initiators such as peresters, e.g. tertiary butyl peroxybenzoate and tertiary butyl peroxyacetate, tertiary butyl peroxyoctoate, dibenzoyl peroxide, dilauroyl peroxide, 1.1-bis tertiarybutyl peroxycyclohexane, 1-3-bis tertiarybutylperoxy-3,3,5-trimethyl cyclohexane, ethyl 3,3 di- t-buty peroxy butyrate, dicumyl peroxide, and the like. Photochemical initiation techniques can be employed if desired. Preferred initiators include tertiary butyl peroctoate, tertiary butyl isopropyl percarbonate, dibenzoyl peroxide, tertiary butyl peroxybenzoate, 1,1-bistertiarybutylperoxycyclo hexane and tertiarybutylperoxy acetate.

Preferably chemical initiators are used in an amount of from 50 to 1000 ppm, more preferably of from 75 to 800 ppm, most preferably of from 150 to 500 ppm based on the total weight of monovinylidene aromatic monomer(s) and polybutadienes.

Organic solvents, optionally used in the bulk polymerization process include aromatic and substituted aromatic hydrocarbons such as benzene, ethylbenzene, toluene, xylene or the like; substituted or unsubstituted, straight or branched chain saturated aliphatics of 5 or more carbon atoms, such as heptane, hexane, octane or the like; alicyclic or substituted alicyclic hydrocarbons having 5 or 6 carbon atoms, such as cyclohexane; and the like. Preferred solvents include substituted aromatics, with ethylbenzene and xylene being most preferred.

In general, the solvent is employed in amounts sufficient to improve the processability and heat transfer during polymerization. Such amounts will vary depending on the rubber, monomer and solvent employed, the process equipment and the desired degree of polymerization. If employed, the solvent is generally employed in an amount of up to 35 weight percent, preferably from 2 to 25 weight percent, based on the total weight of the solution.

Transfer agents include n-octyl mercaptan, t-octyl mercaptan, n-decyl mercaptan, n-dodecyl mercaptan, t-dodecyl mercaptan, tridecyl mercaptan, tetradecyl mercaptan, n-hexadecyl mercaptan, t-nonyl mercaptan, ethyl mercaptan, isopropyl mercaptan, t butyl mercaptan, cyclohexyl mercaptan, benzyl mercaptan and mixtures thereof.

The one or more transfer agent(s), if employed, is (are) generally added in an amount of up to 5000 ppm, preferably between 50 and 3000 ppm, more preferably between 100 and 2000 ppm.

Preferably the polymerization is carried out in a continuous multi-reactor process, performed in a multiple series-connected stirred vessels with continuous flow, each stirred vessel having an optimum temperature range.

Preferably the polymerization is carried out in at least two connected stirred reactors.

An example of the polymerization process comprises sequences of:
- a first reactor standing at a temperature comprised between 90 and 130 °C, preferably between 110 and 130 °C wherein a monomer conversion comprised between 5 and 20%, preferably between 10 and 20% is obtained;
- a second reactor standing at a temperature comprised between 110 and 150 °C, preferably between 130 and 150°C wherein a monomer conversion comprised between 15 and 40%, preferably between 20 and 40% is obtained;
- a third reactor standing at a temperature comprised between 140 and 170 °C, preferably between 150 and 170 °C wherein a monomer conversion comprised between 30 and 70%, preferably between 40 and 70% is obtained; and
- a fourth reactor standing at a temperature comprised between 150 and 190 °C, preferably between 170 and 190 °C wherein a monomer conversion comprised between 60 and 90%, preferably between 70 and 90% is obtained.

The first reactor is preceded by a mixing/dissolving vessel wherein a mixture/solution is prepared, comprising:
- the monovinylidene aromatic monomers, preferably styrene monomers;
- one or more polybutadienes (A) having
   - a cis 1,4 structure content of at least 80 weight percent, preferably of at least 85% by weight, more preferably of at least 90% by weight, most preferably of at least 95% by weight; and
   - a 1,2-vinyl contents of at most 5% by weight, preferably of at most 4% by weight, more preferably of at most 3% by weight, most preferably of at most 2.5% by weight;
- one or more polybutadienes (B), having
   - a trans 1,4 structure content of at least 25% by weight, preferably of at least 35% by weight, more preferably of at least 45% by weight, most preferably of at least 50% by weight; and
   - a 1,2-vinyl contents of at least 5% by weight, preferably of at least 7 % by weight, more preferably of at least 9% by weight, most preferably of at least 10% by weight;
- optional organic solvent;
wherein:
- the concentration of polybutadiene (A) and (B) is between 5 and 25% by weight, preferably between 5 and 20% by weight, more preferably between 5 and 15% by weight, most preferably between 8 and 12% by weight of the total weight of the composition comprising the monovinylidene aromatic polymer matrix and the polybutadiene blend;
- the polybutadiene blend comprises at least 50% by weight of one or more polybutadienes (A), preferably at least 60% by weight, more preferably at least 70% by weight, most preferably at least 80% by weight of one or more polybutadienes (A), and at most 50% by weight, preferably at most 40% by weight, more preferably at most 30% by weight, most preferably at most 20% by weight of one or more polybutadienes (B).

Optionally one or more chemical intiator(s) and/or one or more transfer agent(s) can be added at any stage of the polymerization.

The composition with a monomer conversion comprised between 60 and 90%, preferably between 70 and 90%, as obtained in the last polymerization reactor, is transferred to a 2 steps devolatilizing system (DV1 and DV2), downstream of the last reactor, wherein devolatilizing, to remove the unreacted monomer and a solvent, if present, is carried out at a temperature comprised between 200 and 265°C, preferably between 210 and 245 °C, at a pressure comprised between 1 and 100 mbar.abs, preferably between 10 and 50 mbar.abs, most preferably between 20 and 30 mbar.abs for DV1 and at a pressure comprised between 1 and 100 mbar.abs, preferably between 1 and 50 mbar.abs, most preferably between 1 and 30 mbar.abs for DV2.

Upon completion of the polymerization up to a monomer conversion comprised between 60 and 90%, preferably between 70 and 90%, and prior to transferring to the devolatilizer, one or more retarding agent(s) optionally is (are) added to the composition in an amount up to 5000 ppm, preferably between 20 and 3000 ppm, more preferably between 50 and 2000 ppm, most preferably between 100 and 1000 ppm, said retarding agent including a free radical scavenger, a polyfunctional (meth)acrylic monomer, an allylic compound, a metal salt of an unsaturated monocarboxylic acid, a tertiary amine oxide, an aromatic tertiary amine oxide and a tertiary amine.

High impact polystyrene (HIPS) according to the present invention and prepared according to the process of the present invention, is characterized by an improved Notched Izod impact strength, according to ISO 180/1eA, when compared to commercial available grades of HIPS, with an identical polybutadiene concentration and prepared according to an identical polymerization process, said improved impact strength remaining substantially unchanged over a temperature range of from 23 °C to -20 °C, contrary to the decrease in Notched Izod impact strength characteristic to the commercial available grades of HIPS.

The high impact polystyrene of the present invention further is characterized in that Notched Izod impact strength and other mechanical properties and thermal resistance are substantially maintained after successive extrusions.

The inventors have surprisingly found that incorporation of one or more flame retardants, one or more flame retardant synergists, one or more antioxidants and one or more lubricants has a negligible influence on the mechanical properties of the high impact polystyrene compared to the same high impact polystyrene not comprising said additives. In other words, contrary to the prior art high impact polystyrenes, the incorporation of said additives substantially does not modify/ deteriorate its mechanical properties.

### Articles

The articles of the invention (i.e. made from the composition of the invention) are selected from films, fibers, sheet structures, moulded objects (such as appliance and automobile parts), hoses, refrigerator and other liners, clothing and footwear components, gaskets and the like. The articles are made by any forming and/or shaping process, i.e. extrusion, casting, injection moulding, blow moulding, thermoforming, etc

### Examples.

The following illustrative examples are merely meant to exemplify the present invention but is not intended to limit or otherwise define the scope of the present invention.

### Test methods

Molecular weight: The molecular weight may be measured using gel permeation chromatography. Different solvents can be used, a typical solvent is tetrahydrofuran. Polystyrene standards may be used for calibration.

The melt index of the composition is measured according to ISO 1133. For polystyrene, the melt index (MI5) is measured according to ISO 1133 conditions H at 200 °C under a load of 5 kg.

The glass transition temperature was determined by the method according to ISO 11357-2:2013.

D10(v), D50(v), D90(v) µm: The volume average diameter of the rubber particles was measured by laser light scattering using the particle size analyser HORIBA 920 from Horiba Scientific. The samples were suspended in methyl ethyl ketone at a concentration of about 1 % by weight.

Notched Izod impact of the composition was determined according to ISO 180/1eA.

Vicat Softening temperature B50 was measured according to ISO 306 at a heating rate of 50 °C/hour and under a load of 50 N.

Elongation at break was performed according to ISO 527-1.

Young-modulus was determined according to ISO 527-1.

Tensile strength at yield and at break was determined according to ISO 527-1.

The Heat Deflection Temperature (HDT) was determined in accordance with ISO 75-2/A conditions 80°C, 4H, 1.8 MPa, annealed

### Example 1

Into a reactor fitted with a mechanical stirrer and a temperature control were introduced 90 parts of styrene, 10 parts of a blend of two polybutadienes along with 225 ppm of ethyl 3,3 di-t-buty peroxy butyrate, wherein 100 parts of the polybutadiene blend consist of 80 parts of Budene^{®} 1225 from Goodyear (= polybutadiene (A) and 20 parts of Asaprene^{™} 730AX from Asahi_Kasei Corp. (= polybutadiene (B), said blend being characterized by a dynamic solution viscosity, as determined by Brookfield viscometer according to ISO 2555 at a concentration of 5.43% by weight in toluene, of 136 mPa.s.

The reactor while stirred at 150 rpm was heated to a temperature of 110°C and maintained at that temperature for about 1.5 hours to obtain a monomer conversion of about 15 %; subsequently the temperature was increased to 140 °C and maintained at that temperature for about 1.5 hours to obtain a monomer conversion of about 30%; thereafter the temperature was increased to 160 °C and maintained at that temperature for about 1 hour to obtain a monomer conversion of about 60%; finally the temperature was increased to 180°C and maintained at that temperature to obtain a monomer conversion rate of about 85 %.

To the composition thus obtained 250 ppm of Genox^{®}EP (tertiary amineoxide) were added, 15 minutes before being transferred to a devolatizing unit, where unreacted monomers were removed at a temperature of 225°C and a pressure of 10 mbar.abs.

The rubber particles were characterized by a volume average particle size (D50) of 3.4 µm, a D90 of 6.7 µm and a span of 1.44, as measured by laser light scattering.

The high impact polystyrene of example 1 was characterized by a Weight average Molecular weight (Mw) of 180,000 g/mol and a dispersity (D_{M} = Mw/Mn) of 2.39 wherein Mn is the number average molecular weight, as measured by Gel Permeation Chromatography, and a Melt Index, at 200 °C under a load of 5kg, of 2,27 g/10 min. and a glass transition temperature (DSC, 20 °C/min.) of 105.5 °C.

The product obtained was granulated in a manner which is known to a person skilled in the art. Specimens were produced by injection moulding for carrying out the mechanical tests.

### Comparative example 1

A high impact polystyrene was prepared, wherein 90 parts of styrene, 10 parts of a Buna^{®} CB 550T from Arlanxeo, along with 225 ppm of ethyl 3,3 di- t-buty peroxy butyrate were reacted according the method as disclosed in example 1.

The rubber particles were characterized by a monomodal particle size distribution with a volume average particle size by volume (D50) of 2.8 µm, a D90 of 5.9 µm and a span of 1.6, measured by laser light scattering.

The high impact polystyrene of comparative example 1 was characterized by a Weight average Molecular weight (Mw) of 180,000 g/mol and a dispersity (D_{M} = Mw/Mn) of 2.39, wherein Mn is the number average molecular weight, as measured by Gel Permeation Chromatography, a Melt Index, at 200 °C under a load of 5kg, of 2,21 g/10 min. and a glass transition temperature (DSC, 20 °C/min.) of 104.5 °C.

The HIPS of example 1 and the comparative example 1 were subjected to the Notched Izod Impact test, according to ISO 180/1eA, at a temperature of +23°C, 0°C, -10°C and -20°C respectively. The values, in kJ/m² are represented in table 1.

**Table 1**

| | Example 1 | Comparative Ex. |
|---|---|---|
| 23 °C | 13 | 10.4 |
| 0 °C | 11 | 8 |
| -10 °C | 10 | 7 |
| -20 °C | 9.5 | 6 |

### Example 2

In order to verify thermal stability, upon extrusion, the Notched Izod Impact strength was measured at a temperature of +23 °C and -20 °C respectively for HIPS extruded at 190 °C and 280 °C in a twin-screw extruder, wherein extrusion was performed three times in succession. The values for example 1 and comparative example are given in table 2 and 3 respectively.

**Table 2**

| | Example 1 | Extrusion (3x190 °C) | Extrusion (3x280 °C) |
|---|---|---|---|
| 23 °C | 13 | 12 | 10.5 |
| -20 °C | 9.5 | 9.5 | 8.5 |

**Table 3**

| | Comparative Ex. | Extrusion (3x190 °C) | Extrusion (3x280 °C) |
|---|---|---|---|
| 23 °C | 10.4 | 9.5 | 6 |
| -20 °C | 6 | 5.5 | 4.5 |

Other characteristics generally reported for high Impact polystyrene, such as tensile strength at yield (MPa) and tensile strength at break (MPa) (ISO 527-1), elongation at break (%) (ISO 527-1), Young modulus (MPa) (ISO 527-1), Heat Deflection Temperature (°C) (ISO 75-2/A) and Vicat softening @ 50N (°C) (ISO 306), are substantially comparable, within the experimental error, for example 1 and comparative example 1, measured on the high impact polystyrenes as coming out of the devolatizer (DV1 + DV2) and after 3 extrusions in a twin screw extruder (L/D=52), at a temperature of 255 °C up to 280 °C.

Values are reported in Table 4.

**Table 4**

| | Example 1 | | Comparative Ex. 1 | |
|---|---|---|---|---|
| | Devolatizer | Third extrusion | Devolatizer | Third extrusion |
| Young Modulus | 1737 | 1731 | 1721 | 1707 |
| Tensile Strength @ Yield | 28 | 28.1 | 30 | 31.1 |
| Tensile Stength @ Break | 29 | 29.6 | 30 | 32.8 |
| Elongation @ break | 62 | 52.2 | 65 | 37.6 |
| Heat Deflection Temperature | 74 | 75.9 | 75 | 74.7 |
| Vicat @ 50N | 93 | 94.2 | 93 | 94.3 |

The inventors have surprisingly observed that less Volatile Organic Compounds are detected for HIPS of Example 1 relative to HIPS of Comparative Example 1, as coming from the devolatizer and as extruded at 190 °C and 280 °C in a twin-screw extruder, wherein extrusion was performed three times in succession.

Values, in ppm, are reported in table 5.

Volatile organic Compounds are measured by Gas Chromatography - Flame Ionisation Detection (GC-FID). The rubber-modified polystyrene is solubilized in dichloromethane, and subsequently precipitated through the addition of ethanol comprising n-butylbenzene and n-hexadecane as internal standard. The solution is injected in the GC-FID; the different components are identified based on their retention time, and are quantified by referring to the internal standard.

**Table 5**

| | | Example 1 | | Comparative Ex.1 | |
|---|---|---|---|---|---|
| After Devolatizer | Ethyl benzene | 31 | | 27 | |
| | Styrene | 170 | | 238 | |
| | Sum of dimers | 278 | | 464 | |
| | Sum of trimers | 7637 | | 8749 | |
| | | 190 °C | 280 °C | 190 °C | 280 °C |
| Upon First Extrusion | Ethyl benzene | 24 | 21 | 30 | 19 |
| | Styrene | 151 | 252 | 190 | 416 |
| | Sum of dimers | 290 | 223 | 861 | 638 |
| | Sum of trimers | 8136 | 7962 | 10520 | 11377 |
| Upon Second Extrusion | Ethyl benzene | 24 | 16 | 24 | 17 |
| | Styrene | 158 | 290 | 190 | 508 |
| | Sum of dimers | 320 | 183 | 757 | 501 |
| | Sum of trimers | 8771 | 7921 | 8722 | 10282 |
| Upon Third Extrusion | Ethyl benzene | 20 | 21 | 25 | 16 |
| | Styrene | 125 | 330 | 221 | 551 |
| | Sum of dimers | 324 | 163 | 804 | 429 |
| | Sum of trimers | 8789 | 7846 | 11582 | 10533 |

The inventors further have observed that rheological behavior (log η in Pa.s versus log shear rate in 1/s) of the polymers of Example 1 is similar to the rheological behavior of Comparative Example 1, even at high shear rates.

## Claims

1. A rubber-modified monovinylidene aromatic polymer composition comprising:
I) a matrix comprising monovinylidene aromatic polymer, and
II) from 5 to 25% by weight of rubber in the form of discrete rubber particles dispersed within the matrix, wherein the rubber particles comprise a blend of at least two polybutadienes as well as graft- and block copolymers of polybutadiene and monovinylidene aromatic polymer segments,
said rubber particles exhibit:
- an average particle size by volume (D50) comprised between 1.5 and 5.5 µm, as measured by laser light scattering;
wherein said blend of at least two polybutadienes comprises:
- at least 50 % by weight of one or more polybutadiene(s) with a cis-1,4 structure content of at least 80% by weight and
- at most 50% by weight of one or more polybutadiene(s) with a trans-1-4 structure content of at least 25% by weight and a 1,2-vinyl content of at least 5% by weight;
said blend of at least two polybutadienes, as such and prior to being part of the rubber-modified monovinylidene aromatic (co)polymer, being **characterized by** a dynamic solution viscosity, at 20°C, comprised between 50 and 160 mPa.s, as determined by Brookfield viscometer according to ISO 2555, at a concentration of 5.43% by weight in toluene.

2. The rubber-modified monovinylidene aromatic polymer composition according to claim 1, wherein the rubber particles are **characterized by** a D90 of 12 µm or less and a span (D90 - D10)/D50 equal to or less than 2.

3. The rubber-modified monovinylidene aromatic polymer composition according to claim 1 or 2, wherein the blend of at least two polybutadienes comprises:
- at least 60 % by weight of one or more polybutadiene(s) with a cis-1,4 structure content of at least 80% by weight and
- at most 40% by weight of one or more polybutadiene(s) with a trans-1-4 structure content of at least 25% by weight and a 1,2-vinyl content of at least 5% by weight.

4. The rubber-modified monovinylidene aromatic polymer composition according to any of the preceding claims, wherein the blend of the least two polybutadienes comprises:
- at least 60 % by weight of one or more polybutadiene(s) with a cis-1,4 structure content of at least 90% by weight and
- at most 40% by weight of one or more polybutadiene(s) with a trans-1-4 structure content of at least 35% by weight and a 1,2-vinyl content of at least 10% by weight

5. The rubber-modified monovinylidene aromatic polymer composition according to any of the preceding claims wherein the monovinylidene aromatic polymer, is the polymerization product of one or more monovinylidene aromatic compounds selected from the group consisting of styrene, alpha-methyl styrene and ring-substituted styrenes.

6. The rubber-modified monovinylidene aromatic polymer composition according to any of the preceding claims wherein the monovinylidene aromatic polymer is **characterized by** a weight average molecular weight comprised between 130,000 and 300,000 g/mol.

7. The rubber-modified monovinylidene aromatic polymer composition according to any of the preceding claims wherein the monovinylidene aromatic polymer is polystyrene.

8. The rubber-modified monovinylidene aromatic polymer composition according to any of the preceding claims comprising from 8 to 12% by weight of rubber in the form of discrete, dispersed rubber particles dispersed within the polymer matrix.

9. Method for the preparation of the rubber-modified monovinylidene aromatic polymer composition according to any of the preceding claims 1 to 8, comprising the steps of:
a. providing a solution of a blend of at least two polybutadienes in monovinylidene aromatic monomer;
b. polymerizing the solution of monovinylidene aromatic monomer and polybutadiene in a continuous multi reactor process comprising at least two series-connected stirred vessels with continuous flow, starting at a temperature comprised between 90 and 130 °C and stepwise increasing to a temperature comprised between 150 and 190 °C to a monomer conversion of from 70 to 90%;
c. devolatilizing the composition of step b) at a temperature comprised between 210 and 255 °C and a pressure comprised between 1 and 100 mbar.abs.

10. The method according to claim 9 wherein from 5 to 15% by weight, preferably from 8 to 12% by weight of a blend of at least two polybutadienes is provided in step a).

11. The method according to claim 9 or 10 wherein the blend of at least two polybutadienes, provided in step a), comprises at least 50% by weight of one or more polybutadiene(s) with a cis-1,4 content of at least 80% by weight and at most 50% by weight of one or more polybutadiene(s) with a trans-1,4 structure content of at least 25% by weight and a 1,2-vinyl content of at least 5% by weight.

12. The method according to any of the preceding claims 9 to 11, wherein the blend of at least two polybutadienes, provided in step a), is **characterized by** a dynamic solution viscosity, comprised between 50 and 160 mPa.s, as determined by Brookfield viscometer according to ISO 2555 at a concentration of 5.43% by weight in toluene.

13. The method according to any of claims 9 to 12, wherein one or more polymerization initiator(s) are provided in step b), said one or more polymerization initiator(s) being free radical initiator(s).

14. The method according to any of claims 9 to 13 wherein one or more retarding agent(s), selected from the group consisting of free radical scavenger, a polyfunctional (meth)acrylic monomer, an allylic compound, a metal salt of an unsaturated monocarboxylic acid, a tertiary amine oxide, an aromatic tertiary amine oxide, a tertiary amine and mixtures thereof, is (are) added before initiation of step c).

15. The rubber-modified monovinylidene aromatic polymer composition according to any of claims 1 to 8, **characterized by**:
- an Izod impact strength, according to ISO 527-1, of at least 12 kJ/m², measured at 23 °C;
- an Izod impact strength, according to ISO 527-1, of at least 9 kJ/m², measured at -20 °C;
- a young modulus, according to ISO 527-1, of at least 1700 MPa;
- a tensile strength, according to ISO 527-1, of at least 25 MPa; and
- an elongation at break, according to ISO 527-1, of at least 50 %;
said characteristics applying to the monovinylidene aromatic polymer composition as obtained after the devolatilization step and on the devolatized monovinylidene aromatic polymer composition after three extrusions at a temperature of at least 250 °C up to 280 °C, in a twin-screw extruder with a L/D value of 52.

## Patentansprüche

1. Zusammensetzung von kautschukmodifiziertem aromatischem Monovinylidenpolymer, die umfasst:
I) eine Matrix, die ein aromatisches Monovinylidenpolymer umfasst, und
II) zu 5 bis 25 Gew.-% Kautschuk in Form von einzelnen Kautschukpartikeln, die innerhalb der Matrix dispergiert sind, wobei die Kautschukpartikel eine Mischung von zumindest zwei Polybutadienen sowie Pfropf- und Blockcopolymere von Polybutadien und Segmenten von aromatischem Monovinylidenpolymer umfassen,
wobei die Kautschukpartikel aufweisen:
- eine durchschnittliche Partikelgröße nach Volumen (D50) zwischen 1,5 und 5,5 µm, wobei die Messung mittels Laserlichtstreuung erfolgte;
wobei die Mischung von zumindest zwei Polybutadienen umfasst:
- zu zumindest 50 Gew.-% ein oder mehrere Polybutadiene mit einem cis-1,4-Strukturgehalt von zumindest 80 Gew.-%, und
- zu höchstens 50 Gew.-% ein oder mehrere Polybutadiene mit einem trans-1-4-Strukturgehalt von zumindest 25 Gew.-% und einem 1,2-Vinylgehalt von zumindest 5 Gew.-%:
wobei die Mischung von zumindest zwei Polybutadienen in diesem Zustand und bevor sie Teil des kautschukmodifizierten aromatischen Monovinyliden(co)polymers wird, durch eine dynamische Lösungsviskosität bei 20 °C zwischen 50 und 160 mPa.s gekennzeichnet ist, wobei die Messung mithilfe eines Brookfield-Viskosimeters gemäß ISO2555 bei einer Konzentration von 5,43 Gew.-% in Toluol erfolgte.

2. Zusammensetzung von kautschukmodifiziertem aromatischem Monovinylidenpolymer nach Anspruch 1, wobei die Kautschukpartikel durch eine D90 von 12 µm oder weniger und einen Span-Wert (D90 - D10) / D50 kleiner gleich 2 gekennzeichnet sind.

3. Zusammensetzung von kautschukmodifiziertem aromatischem Monovinylidenpolymer nach Anspruch 1 oder 2, wobei die Mischung von zumindest zwei Polybutadienen umfasst:
- zu zumindest 60 Gew.-% ein oder mehrere Polybutadiene mit einem cis-1,4-Strukturgehalt von zumindest 80 Gew.-%, und
- zu höchstens 40 Gew.-% ein oder mehrere Polybutadiene mit einem trans-1-4-Strukturgehalt von zumindest 25 Gew.-% und einem 1,2-Vinylgehalt von zumindest 5 Gew.-%.

4. Zusammensetzung von kautschukmodifiziertem aromatischem Monovinylidenpolymer nach einem der vorstehenden Ansprüche, wobei die Mischung der zumindest zwei Polybutadiene umfasst:
- zu zumindest 60 Gew.-% ein oder mehrere Polybutadiene mit einem cis-1,4-Strukturgehalt von zumindest 90 Gew.-%, und
- zu höchstens 40 Gew.-% ein oder mehrere Polybutadiene mit einem trans-1-4-Strukturgehalt von zumindest 35 Gew.-% und einem 1,2-Vinylgehalt von zumindest 10 Gew.-%.

5. Zusammensetzung von kautschukmodifiziertem aromatischem Monovinylidenpolymer nach einem der vorstehenden Ansprüche, wobei das aromatische Monovinylidenpolymer das Polymerisationsprodukt eines oder mehrerer aromatischer Monovinylidenverbindungen ist, die aus der Gruppe ausgewählt sind, die aus Styrol, Alpha-Methyl-Styrol und ringsubstituierten Styrolen besteht.

6. Zusammensetzung von kautschukmodifiziertem aromatischem Monovinylidenpolymer nach einem der vorstehenden Ansprüche, wobei das aromatische Monovinylidenpolymer durch ein gewichtsmittleres Molekulargewicht zwischen 130.000 und 300.000 g/mol gekennzeichnet ist.

7. Zusammensetzung von kautschukmodifiziertem aromatischem Monovinylidenpolymer nach einem der vorstehenden Ansprüche, wobei das aromatische Monovinylidenpolymer Polystyrol ist.

8. Zusammensetzung von kautschukmodifiziertem aromatischem Monovinylidenpolymer nach einem der vorstehenden Ansprüche, die 8 bis 12 Gew.-% Kautschuk in Form von einzelnen dispergierten Kautschukpartikeln umfasst, die innerhalb der Polymermatrix dispergiert sind.

9. Verfahren zum Herstellen der Zusammensetzung von kautschukmodifiziertem aromatischem Monovinylidenpolymer nach einem der vorstehenden Ansprüche 1 bis 8, das die Schritte umfasst:
a. Bereitstellen einer Lösung von einer Mischung von zumindest zwei Polybutadienen in aromatischem Monovinylidenmonomer;
b. Polymerisieren der Lösung von aromatischem Monovinylidenmonomer, und Polybutadien in einem kontinuierlichen Prozess mit mehreren Reaktoren, der zumindest zwei in Reihe geschaltete Durchlauf-Rührtanks umfasst, wobei bei einer Temperatur zwischen 90 und 130 °C gestartet wird und die Temperatur schrittweise auf zwischen 150 und 190 °C zu einer Monomerumwandlung von 70 bis 90 % erhöht wird;
c. Entgasen der Zusammensetzung von Schritt b) bei einer Temperatur zwischen 210 und 255 °C und einem Druck zwischen 1 und 100 mbar (abs.).

10. Verfahren nach Anspruch 9, wobei in Schritt a) 5 bis 15 Gew.-%, vorzugsweise 8 bis 12 Gew.-%, an einer Mischung von zumindest zwei Polybutadienen bereitgestellt werden.

11. Verfahren nach Anspruch 9 oder 10, wobei die Mischung von zumindest zwei Polybutadienen, die in Schritt a) bereitgestellt wird, zu zumindest 50 Gew.-% ein oder mehrere Polybutadiene mit einem cis-1,4-Gehalt von zumindest 80 Gew.-% und zu höchstens 50 Gew.-% ein oder mehrere Polybutadiene mit einem trans-1,4-Strukturgehalt von zumindest 25 Gew.-% und einem 1,2-Vinylgehalt von zumindest 5 Gew.-% umfasst.

12. Verfahren nach einem der vorstehenden Ansprüche 9 bis 11, wobei die Mischung von zumindest zwei Polybutadienen, die in Schritt a) bereitgestellt wird, durch eine dynamische Lösungsviskosität zwischen 50 und 160 mPa.s gekennzeichnet ist, wobei die Messung mithilfe eines Brookfield-Viskosimeters gemäß ISO2555 bei einer Konzentration von 5,43 Gew.-% in Toluol erfolgte.

13. Verfahren nach einem der Ansprüche 9 bis 12, wobei ein oder mehrere Polymerisationsinitiatoren in Schritt b) bereitgestellt werden, wobei der eine oder die mehreren Polymerisationsinitiatoren Freie-Radikale-Initiatoren sind.

14. Verfahren nach einem der Ansprüche 9 bis 13, wobei ein oder mehrere verzögernde Mittel vor Initiierung von Schritt c) hinzugefügt werden, die aus der Gruppe ausgewählt sind, die aus Freie-Radikale-Fänger, einem polyfunktionalen (Meth)acrylmonomer, einer Allylverbindung, einem Metallsalz einer ungesättigten Monocarbonsäure, einem tertiären Aminoxid, einem aromatischen tertiären Aminoxid, einem tertiären Amin und Gemischen davon besteht.

15. Zusammensetzung von kautschukmodifiziertem aromatischem Monovinylidenpolymer nach einem der Ansprüche 1 bis 8, **gekennzeichnet durch**:
- eine Izod-Schlagzähigkeit gemäß ISO 527-1 von zumindest 12 kJ/m², gemessen bei 23 °C;
- eine Izod-Schlagzähigkeit gemäß ISO 527-1 von zumindest 9 kJ/m², gemessen bei -20 °C;
- einen Elastizitätsmodul gemäß ISO 527-1 von zumindest 1700 MPa;
- eine Zugfestigkeit gemäß ISO 527-1 von zumindest 25 MPa; und
- eine Bruchdehnung gemäß ISO 527-1 von zumindest 50 %;
wobei die Eigenschaften auf die Zusammensetzung von aromatischem Monovinylidenpolymer, wie sie nach dem Entgasungsschritt erhalten wird, und die entgaste Zusammensetzung von aromatischem Monovinylidenpolymer nach drei Extrusionen bei einer Temperatur von zumindest 250 °C bis zu 280 °C in einem Doppelschneckenextruder mit einem L/D-Wert von 52 zutreffen.

## Revendications

1. Composition de polymère aromatique de monovinylidène modifié par du caoutchouc comprenant :
I) une matrice comprenant un polymère aromatique de monovinylidène, et
II) de 5 à 25 % en poids de caoutchouc sous forme de particules de caoutchouc discrètes dispersées dans la matrice, les particules de caoutchouc comprenant un mélange d'au moins deux polybutadiènes ainsi que des copolymères greffés et séquencés de segments de polymère aromatique de polybutadiène et de monovinylidène,
lesdites particules de caoutchouc présentant :
- une taille de particule moyenne volumique (D50) comprise entre 1,5 et 5,5 µm, telle que mesurée par diffusion de lumière laser ;
dans lesquelles ledit mélange d'au moins deux polybutadiènes comprend :
- au moins 50 % en poids d'un ou plusieurs polybutadiènes ayant une teneur en structure cis-1,4 d'au moins 80 % en poids et
- au plus 50 % en poids d'un ou plusieurs polybutadiènes ayant une teneur en structure trans-1-4 d'au moins 25 % en poids et une teneur en 1,2-vinyle d'au moins 5 % en poids ;
ledit mélange d'au moins deux polybutadiènes, en tant que tel et avant de faire partie du (co)polymère aromatique de monovinylidène modifié par du caoutchouc, étant **caractérisé par** une viscosité dynamique en solution à 20 °C comprise entre 50 et 160 mPa.s, telle que déterminée par un viscosimètre Brookfield selon ISO 2555, à une concentration de 5,43 % en poids dans le toluène.

2. Composition de polymère aromatique de monovinylidène modifiée par caoutchouc selon la revendication 1, dans laquelle les particules de caoutchouc sont **caractérisées par** un D90 inférieur ou égal à 12 µm et un intervalle (D90-D10)/D50 égal ou inférieur à 2.

3. Composition de polymère aromatique de monovinylidène modifié par du caoutchouc selon la revendication 1 ou 2, dans laquelle le mélange d'au moins deux polybutadiènes comprend :
- au moins 60 % en poids d'un ou plusieurs polybutadiènes ayant une teneur en structure cis-1,4 d'au moins 80 % en poids et
- au plus 40 % en poids d'un ou plusieurs polybutadiènes ayant une teneur en structure trans-1-4 d'au moins 25 % en poids et une teneur en 1,2-vinyle d'au moins 5 % en poids.

4. Composition de polymère aromatique de monovinylidène modifié par du caoutchouc selon l'une quelconque des revendications précédentes, dans laquelle le mélange des au moins deux polybutadiènes comprend :
- au moins 60 % en poids d'un ou plusieurs polybutadiènes ayant une teneur en structure cis-1,4 d'au moins 90 % en poids et
- au plus 40 % en poids d'un ou plusieurs polybutadiènes ayant une teneur en structure trans-1-4 d'au moins 35 % en poids et une teneur en 1,2-vinyle d'au moins 10 % en poids.

5. Composition de polymère aromatique de monovinylidène modifié par du caoutchouc selon l'une quelconque des revendications précédentes, dans laquelle le polymère aromatique de monovinylidène est le produit de polymérisation d'un ou plusieurs composés aromatiques de monovinylidène choisis parmi le groupe constitué du styrène, de l'alpha-méthylstyrène et de styrènes substitués par un cycle.

6. Composition de polymère aromatique de monovinylidène modifié par du caoutchouc selon l'une quelconque des revendications précédentes, dans laquelle le polymère aromatique de monovinylidène est **caractérisé par** un poids moléculaire moyen en poids compris entre 130 000 et 300 000 g/mol.

7. Composition de polymère aromatique de monovinylidène modifié par du caoutchouc selon l'une quelconque des revendications précédentes, dans laquelle le polymère aromatique de monovinylidène est du polystyrène.

8. Composition de polymère aromatique de monovinylidène modifié par du caoutchouc selon l'une quelconque des revendications précédentes, comprenant de 8 à 12 % en poids de caoutchouc sous la forme de particules de caoutchouc discrètes dispersées dans la matrice de polymère.

9. Procédé de préparation de la composition de polymère aromatique de monovinylidène modifié par du caoutchouc selon l'une quelconque des revendications 1 à 8 précédentes, comprenant les étapes de :
a. fourniture d'une solution d'un mélange d'au moins deux polybutadiènes dans un monomère aromatique de monovinylidène ;
b. polymérisation de la solution de monomère aromatique de monovinylidène et de polybutadiène dans un processus continu à réacteurs multiples comprenant au moins deux cuves agitées raccordées en série avec un flux continu, en commençant à une température comprise entre 90 et 130 °C et en augmentant progressivement jusqu'à une température comprise entre 150 et 190 °C et une conversion de monomère de 70 à 90 % ;
c. dévolatilisation de la composition de l'étape b) à une température comprise entre 210 et 255 °C et une pression comprise entre 1 et 100 mbar.abs.

10. Procédé selon la revendication 9, dans lequel de 5 à 15 % en poids, de préférence de 8 à 12 % en poids d'un mélange d'au moins deux polybutadiènes est fourni à l'étape a).

11. Procédé selon la revendication 9 ou 10 dans lequel le mélange d'au moins deux polybutadiènes, fourni à l'étape a), comprend au moins 50 % en poids d'un ou plusieurs polybutadiènes ayant une teneur en cis-1,4 d'au moins 80 % en poids et au plus 50 % en poids d'un ou plusieurs polybutadiènes ayant une teneur en structure trans-1,4 d'au moins 25 % en poids et une teneur en 1,2-vinyle d'au moins 5 % en poids.

12. Procédé selon l'une quelconque des revendications précédentes 9 à 11, dans lequel le mélange d'au moins deux polybutadiènes, fourni à l'étape a), est **caractérisé par** une viscosité dynamique en solution, comprise entre 50 et 160 mPa.s, telle que déterminée par un viscosimètre Brookfield selon ISO 2555 à une concentration de 5,43 % en poids dans le toluène.

13. Procédé selon l'une quelconque des revendications 9 à 12, dans lequel un ou plusieurs amorceurs de polymérisation sont fournis à l'étape b), lesdits un ou plusieurs amorceurs de polymérisation étant des amorceurs radicalaires libres.

14. Procédé selon l'une quelconque des revendications 9 à 13, dans lequel un ou plusieurs agents retardateurs, choisis parmi le groupe constitué d'un piégeur de radicaux libres, un monomère (méth)acrylique polyfonctionnel, un composé allylique, un sel métallique d'un acide monocarboxylique insaturé, un oxyde d'amine tertiaire, un oxyde d'amine tertiaire aromatique, une amine tertiaire et leurs mélanges, est ou sont ajoutés avant le début de l'étape c).

15. Composition de polymère aromatique de monovinylidène modifié par du caoutchouc selon l'une quelconque des revendications 1 à 8, **caractérisée par** :
- une résistance aux chocs Izod, selon ISO 527-1, d'au moins 12 kJ/m², mesurée à 23 °C ;
- une résistance aux chocs Izod, selon ISO 527-1, d'au moins 9 kJ/m², mesurée à -20 °C ;
- un module de Young, selon ISO 527-1, d'au moins 1700 MPa ;
- une résistance à la traction, selon ISO 527-1, d'au moins 25 MPa ; et
- un allongement à la rupture, selon ISO 527-1, d'au moins 50 % ;
lesdites caractéristiques s'appliquant à la composition de polymère aromatique de monovinylidène telle qu'obtenue après l'étape de dévolatilisation et à la composition de polymère aromatique de monovinylidène dévolatilisée après trois extrusions à une température d'au moins 250 °C jusqu'à 280 °C, dans une extrudeuse à deux vis avec une valeur L/D de 52.
